# EUROPEAN PATENT SPECIFICATION

(11) **EP 4 132 675 B1**
(45) Date of publication and mention of the grant of the patent: **27.03.2024**
(21) Application number: 21719968.6
(22) Date of filing: 30.03.2021
(51) Int. Cl.: B01D 29/35, B01D 29/64, B01D 35/147, B01D 29/66, B01D 29/68

(54) **SELF-CLEANING FILTER**
SELBSTREINIGENDER FILTER
FILTRE AUTO-NETTOYANT

(30) Priority: 08.04.2020 IT 202000007459
(43) Date of publication of application: 15.02.2023
(73) Proprietor: Alfa Water S.r.l., 32036 Sedico (BL) (IT)
(72) Inventor: CENDRON, Nicola, 32036 Sedico BL (IT)
(74) Representative: Perani & Partners S.p.A.
(86) International application number: PCT/IB2021/052629
(87) International publication number: WO 2021/205286

(56) References cited:
- EP-A1- 3 044 165
- EP-A1- 3 424 578
- IT-A1- VR20 110 118
- US-A1- 2014 021 125

## Description

The present invention relates to a self-cleaning filter for liquids. Such a filter is particularly usable whenever it is necessary to remove solid particulates and/or insoluble liquid from a liquid to be filtered, usually water. Such a system is usually used in purification plants, treatment plants, or for the filtration of water for industrial, civil, naval or other use.

Self-cleaning filters are known in the state of the art. Such filters comprise an inlet opening, a delivery opening, a tubular element for filtering the liquid flowing from the inlet opening to the delivery opening, and a plurality of shoes arranged inside the tubular element, in particular in proximity to the internal surface. Such shoes, rotating with respect to a central axis, are capable of sweeping substantially the entire internal surface of the tubular element. The shoes are each provided with a respective suction opening, capable of withdrawing dirt from the internal surface of the tubular element.

In US 2014/021125 A1, the suction shoes are T-shaped and have a longitudinally extending suction slot. Such suction shoes were unsatisfactory in terms of flow/suction flow distribution along the suction slot. In fact, it is maximum in the central part at the discharge opening of the shoe and minimum in the end parts.

A further filter is shown in EP 3424578 A1, in the name of the same Applicant. Such a filter is similar to the previous ones, but comprises brushes fixed to the suction shoes. The combined action of the brushes and suction allows to significantly improve the efficiency of the self-cleaning system with respect to the previous filters.

The filter described in EP 3044165 A1 is further known. In this filter, the suction openings of the shoes are selectively activatable. In particular, in a first step of the cleaning cycle the shoes act without suction, but only through the mechanical action of the brushes. This mode removes coarser dirt, which is then made to outflow through a first discharge line, connected in fluid communication with the internal surface of the tubular element.

In a second mode, the suction openings of the shoes are activated, so as to collect the finer dirt particles. Such dirt particles are then expelled through a second discharge line, placed in fluid communication with the suction openings.

### SUMMARY OF THE INVENTION

All the known self-cleaning filters, except for the filter of EP `578, require a prefilter connected upstream of the self-cleaning filter itself. Such a prefilter has the function of removing the larger particles of contaminant dirt which would otherwise quickly saturate the self-cleaning filter. Such prefilters comprise a grille which intercepts the liquid flow upstream of the self-cleaning filter.

Unfortunately, in addition to making the system more complex, the prefilters must be subject to a maintenance cycle distinct from that of the self-cleaning filter. In the state of the art, the prefilters are periodically extracted and cleaned by the operator by hand. To carry out this operation it is necessary to block the system, losing the main advantage of the self-cleaning of the filter.

The filter of EP `578 manages to overcome the disadvantage of the prefilter by carrying out a two-stage cleaning process, which is capable of removing both the largest and the smallest dirt particles from the inside of the filter. It should be noted, however, that this advantageous solution is achieved by significantly increasing the complexity of the filter, since it requires the presence of two separate discharge lines, one for coarse dirt and the other for finer dirt.

In this context, the technical task underlying the present invention is to propose a self-cleaning filter which overcomes the drawbacks of the prior art mentioned above.

In particular, an object of the present invention is to provide a self-cleaning filter which does not require a prefilter and, at the same time, which simplifies the hydraulic connections to the system and the control of the cleaning process.

The technical task mentioned and the objects stated are substantially achieved by a self-cleaning filter, comprising the technical features set out in one or more of the appended claims.

In particular, a self-cleaning filter according to the present invention comprises the technical features of claim 1.

Such a device solves the technical problem, as it can operate in two distinct steps. In the first step, the rubbing carried out by the contact cleaning means, i.e., by the brushes, allows the larger dirt particles to be detached from the filter by mechanical action. By opening the bypass valve, the suction acts mainly through the latter and not through the suction apertures of the cleaning elements, allowing the coarsest dirt to be removed and made to outflow to the discharge line directly through the bypass valve.

Subsequently the bypass valve is closed. Thereby, a greater suction is generated at the suction apertures of the shoes, and the smaller dirt particles can also be removed, which can be made to outflow from the same discharge opening.

This filter operating mode no longer requires the prefilter as in the state of the art, since the larger particles settle directly inside the self-cleaning filter and can be disposed of during a normal cleaning cycle. In addition, the cleaning cycle of the self-cleaning filter according to the present invention allows both coarse and fine dirt to flow through a single discharge line, thereby simplifying both the structure of the filter and the control of the cleaning process. In fact, to switch from one mode to another it is necessary to act exclusively on the bypass valve, while the suction is kept active throughout the cycle.

### LIST OF FIGURES

Further features and advantages of the present invention will become more apparent from the description of an exemplary, but not exclusive, and therefore non-limiting preferred embodiment of a self-cleaning filter, as illustrated in the appended figures, in which:
- Figure 1 shows a sectional front view of the self-cleaning filter in accordance with the present invention;

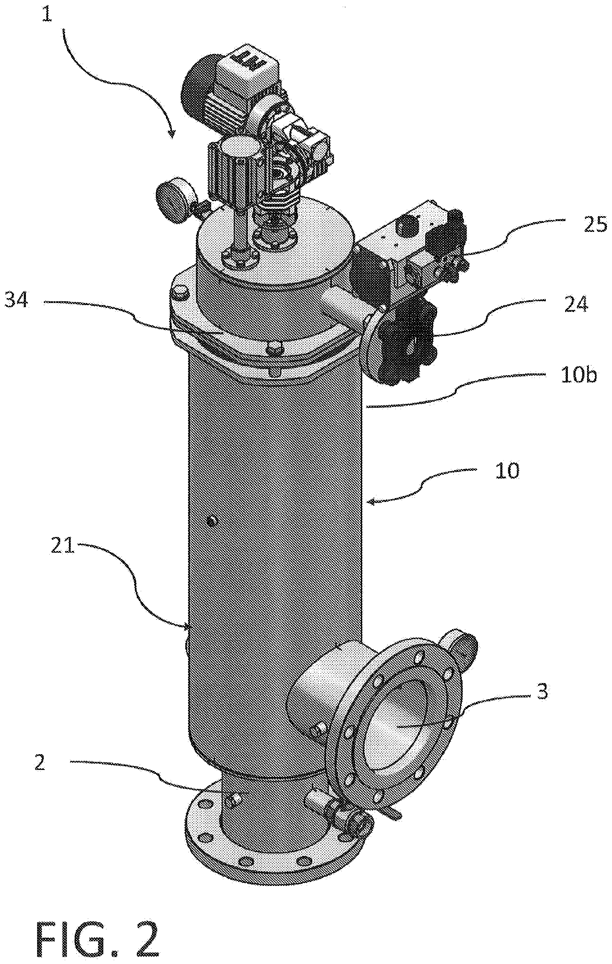

- Figure 2 shows a perspective view of the self-cleaning filter of Figure 1;
- Figure 3 shows an enlarged perspective and partially sectional view of a detail of the self-cleaning filter of Figures 1 and 2;
- Figure 4 shows a perspective view of a detail of the filter of Figure 1; and
- Figure 5 shows an exploded perspective view of the detail of Figure 3.

### DETAILED DESCRIPTION

With reference to the accompanying figures, the number 1 indicates a self-cleaning filter in accordance with an embodiment of the present invention.

The filter 1 comprises a casing 21. This casing 21 encloses a volume adapted to contain both the fluid to be filtered and the filtered fluid. In particular, the casing 21 has a first 21a and a second end 21b arranged along a longitudinal development direction "A". Depending on the applications, the longitudinal development direction "A" can be oriented horizontally, vertically or in any other intermediate direction.

More in detail, the casing 21 has an inlet opening 2 through which the fluid to be filtered is introduced. The casing 21 also has a delivery opening 3 from which the filtered fluid flows. The casing 21 is further provided with a discharge opening 24, distinct from the delivery opening 3, the function of which will be illustrated in a subsequent part of the present description.

A tubular filtering element 10 is inserted in the casing 21. Such a tubular element 10 is configured to be passed through by a fluid to be filtered. The tubular element 10 extends in particular along the aforementioned longitudinal development axis "A". Preferably, the tubular element 10 is arranged between the ends 21a, 21b of the casing 21 and, even more preferably, has a cylindrical shape. In accordance with a preferred embodiment, the tubular element 10 consists of a filtering mesh.

In detail, the tubular element 10 defines an internal zone 22 within the casing 21. Such an internal zone 22 is adapted to be placed in communication with a source of fluid to be filtered, in particular through the inlet opening 2. An internal surface 10a faces the internal zone 22, and is adapted to receive and retain the suspended contaminant in the fluid to be filtered. An external surface 10b is opposite the internal surface 10a.

The tubular element 10 further defines an external zone 23 within the casing 21. Such an external zone 23 is in particular comprised between the external surface 10b of the tubular element 10 and the casing 21. The external zone 23 receives the filtered fluid from the tubular element 10 and allows it to flow through the delivery opening 3.

To remove the contaminant which deposits on the tubular element 10, the self-cleaning filter 1 comprises one or more cleaning elements 4 placed within the internal zone 23. The cleaning elements 4 are spaced from each other along the longitudinal development direction "A". Multiple elements can be placed in the same position on the longitudinal axis "A". In this case, these cleaning elements 4 are arranged angularly equally spaced from each other around the longitudinal development axis "A". Preferably, the cleaning elements 4 arranged adjacent along the longitudinal development direction "A" are angularly spaced by 120°.

The cleaning elements 4 are in particular configured to rotate around the longitudinal development direction "A". In detail, the filter 1 comprises a hollow shaft 8 arranged centrally and oriented along the longitudinal development direction "A". The cleaning element 4 are connected to the shaft 8 which, by rotating, rotates them with respect to the tubular element 10.

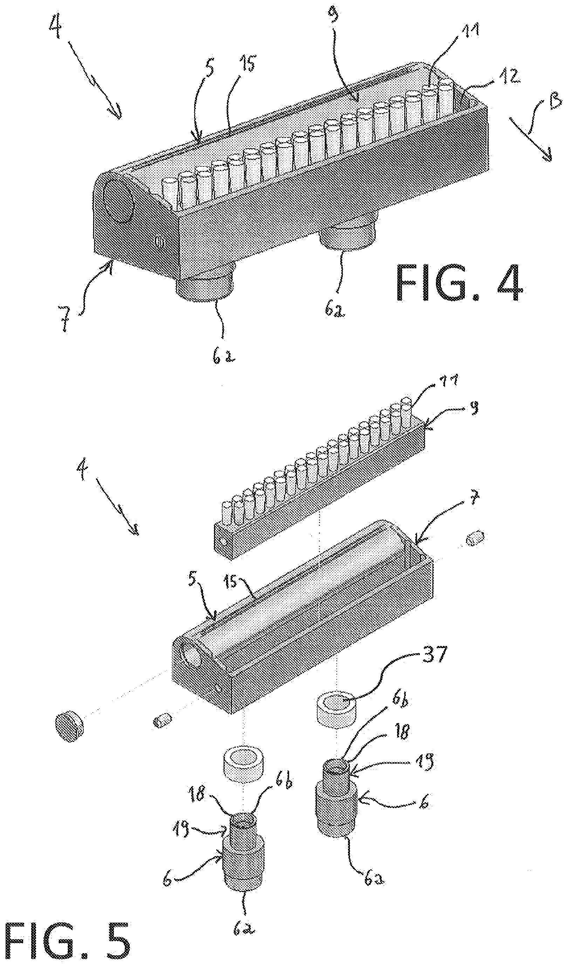

With reference to the illustrated embodiment, each cleaning element 4 has an advancement direction "B". In other words, as a result of the rotation around the longitudinal development direction "A" of the tubular element 10, each cleaning element travels along the internal surface 10a advancing along an advancement direction "B", as shown for example in figure 4.

More in detail, each cleaning element 4 comprises a suction aperture 5. In use, the suction aperture 5 faces the internal surface 10a of the tubular element 10, in particular placed near the internal surface 10a, in particular in contact therewith. Such a first suction aperture 5 has the function of sucking the filtered impurities from the internal surface 10a of the tubular element 10.

In further detail, the suction aperture 5 comprises a slot 15, preferably of constant width, which extends along the longitudinal development direction "A" for more than 90% of the length of the cleaning element 4.

According to an embodiment, the cleaning elements 4 are spaced along the longitudinal development direction "A" so that, following the rotation thereof around the longitudinal development direction "A" of the tubular element 10, the surfaces swept by the suction apertures 5 of two adjacent cleaning elements 4 overlap with a ratio of overlapping area to total area of the suction aperture 5 in a range between 5% and 35%.

Each cleaning element 4 comprises in particular a pair of rods 6 and a shoe 7. Each rod 6 is oriented radially with respect to the tubular element 10. In particular, each rod 6 has a first end 6a and a second end 6b. The first end 6a is connected to the shaft 8 mentioned above.

The shoe 7 is connected to the second ends 6b of the rods 6, and is in particular arranged transversely with respect thereto. Said shoe 6 is arranged in a zone near the internal surface 10a of the tubular element 10, in particular substantially in contact therewith.

As shown for example in figure 4, each cleaning element 4 is provided with quick connection means 19 active between the rod 6 and the shoe 7. Such quick connection means 19 have the function of connecting/disconnecting the rod 6 from the shoe 7. Advantageously, the quick connection means 19 ensure a stable fixing of the shoe 7 on the rod 6, useful in particular when the cleaning element 4 is extracted from the tubular element 10 to perform maintenance operations.

It should be noted that the shoe 7 extends substantially parallel to the longitudinal development direction "A". The first suction aperture 5, described above, is obtained on the shoe 7.

Each cleaning element 4 can advantageously comprise at least one elastic element 37, in particular an elastic bellows, connected to the shoe 7 and configured to push it against the internal surface 10a. Advantageously, the shoe 7 can be made of plastic material.

It should be noted that, according to the invention, each cleaning element 4 comprises contact cleaning means 9, arranged in particular on the shoe 7. Such contact cleaning means 9 are configured to rub on the internal surface 10a of the tubular element 10, so as to remove dirt. In particular, the contact cleaning means 9 are positioned in front of the first suction aperture 5 along the advancement direction "B".

In greater detail, the contact cleaning means 9 comprise a plurality of brushes 11. Each brush 11 is fixed to a respective cleaning element 4, and is configured to slide in contact with the internal surface 10a of the tubular element 10 along the aforementioned advancement direction "B". Advantageously, the brush 11 allows a greater amount of dirt to be removed by mechanic al action.

More in detail, each cleaning element 4 has a seat 12, in particular obtained on the shoe 7. The aforementioned brush 11 is arranged inside the seat 12. In further detail, each brush 11 is insertable/removable in/from the seat 12, so as to be connected/disconnected to the respective cleaning element 4. More in detail, a pair of plugs (not illustrated) fixes the brush 11 inside the seat 12. Such plugs are in themselves a fixing mechanism known to those skilled in the art, and will therefore not be described further.

Advantageously, the removability of the brushes 11 allows to replace them when they are worn and/or to select a particular type of brush 11 more suitable for the particular type of tubular element 10 mounted in the filter 1.

The self-cleaning filter 1 further comprises a suction conduit 16 arranged within the tubular element 10, in particular within the shaft 8, and configured to rotate with respect to the tubular element 10.

Preferably, the suction conduit 16 is arranged coaxially with respect to the tubular element 10.

In accordance with an embodiment, in order to allow the rotation of the cleaning elements 4 with respect to the tubular element 10, the cleaning elements 4 are fixed in rotation to the suction conduit 16 and project radially from the suction conduit 16.

In particular, the suction conduit 16 has a plurality of connection openings 17. Each connection opening 17 is connected to a respective cleaning element 4 through a respective connection conduit 18. It should be noted that the connection conduit is defined within at least one of the two rods 6 forming the cleaning element 4, preferably within both rods 6.

It should now be noted that the above-mentioned discharge opening 24 is arranged to expel the dirt removed from the internal surface 10a. In particular, the discharge opening 24 is placed in fluid communication with the internal zone 22 and, in particular, with the suction apertures 5 of the cleaning elements 4. The filter 1 further comprises a discharge valve 25 placed at the discharge opening 24.

More in detail, the discharge opening 24 is formed at the first end 21a of the casing 21. In particular, a chamber 27 is arranged coaxially to the tubular element 10, and is placed at the first end 21a. The discharge opening 24 is formed at such a chamber 27. The aforementioned shaft 8 coaxially passes through the chamber 27.

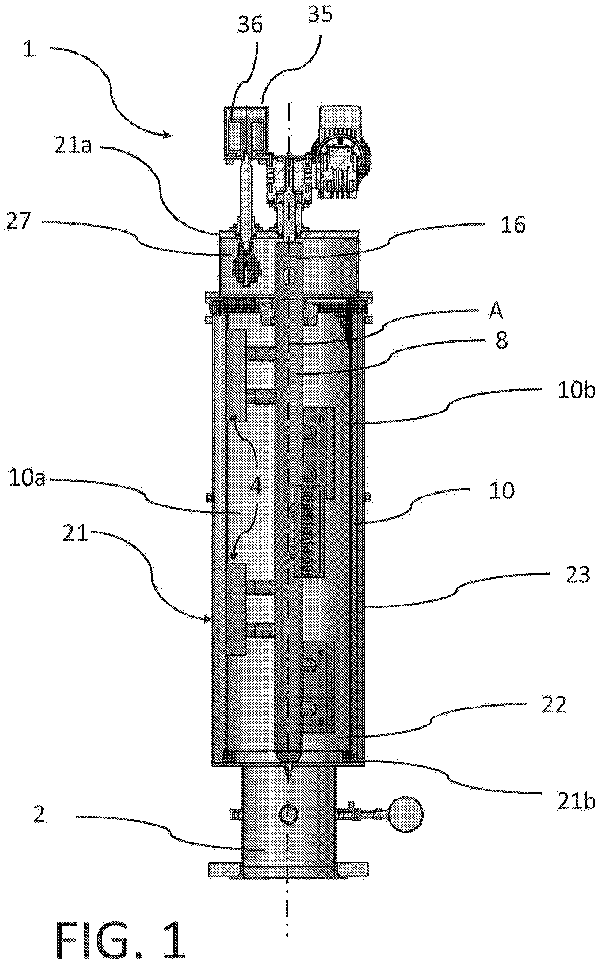

In accordance with the present invention, the filter 1 is provided with at least one bypass valve 30. Such a bypass valve 30 is placed in parallel with respect to the suction apertures 5 of the cleaning elements 4. In use, the bypass valve 30 can be opened, so as to put the internal zone 22 directly in fluid communication with the discharge opening 24. In particular, the bypass valve 30 is placed between the internal zone 22 and the chamber 27. In the embodiment shown in figure 1, the filter 1 comprises a single bypass valve 30. In alternative embodiments, not shown, there can be any number of bypass valves 30.

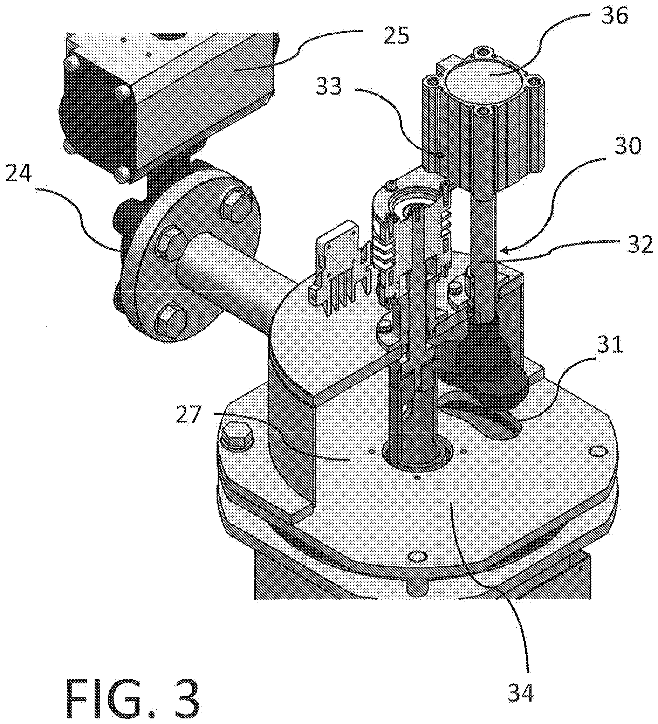

In more detail, as shown for example in figure 3, the bypass valve 30 comprises a bypass opening 31, which is placed between the chamber 27 and the internal zone 22. In particular, the filter 1 comprises a separation wall 34 arranged between the chamber 27 and the internal zone 22. The bypass opening 31 is then formed on the wall 34.

A stem 32 is associated with the bypass opening 31, and is movable with respect thereto to open and/or close it. In particular, in the described embodiment the stem is oriented substantially parallel to the longitudinal development direction "A".

The bypass valve 30 further comprises actuating means 33 for the stem 32, so as to be able to move it with respect to the bypass opening 30. Such actuating means 33 comprise a cylinder 35 and a piston 36, inserted in the cylinder 35 and slidable therein. The piston 36 is connected to the stem 32, in particular to the opposite end of the bypass opening 31.

In the preferred embodiment, the cylinder 35 and the piston 36 are of a pneumatic type. In alternative embodiments, the piston 35 and the cylinder 36 can be of another type, for example of the hydraulic type. More generally, the actuating means 33 can be of any type, as long as they are suitable for the purpose. For example, the actuating means 33 can comprise an electric linear actuator.

The object of the present invention is also a self-cleaning process of the filter 1 described above. In particular, in a first step a rough cleaning is carried out by rotating the cleaning elements 4 to sweep the internal surface 10a of the tubular element 10. At the same time, fluid is sucked from the discharge opening 24, and the bypass valve 30 is opened. Thereby the contaminant, mainly the larger particles, is removed from the brushes 11 and flows predominantly from the bypass opening 31 directly to the discharge opening 24.

Subsequently the bypass valve 30 is closed. The cleaning elements 4 are kept in rotation, but now the dirt is sucked through the suction apertures 5 of the shoes 7. Thereby, even small dirt particles can be removed by suction. They are also discharged through the aforementioned discharge opening 24.

It should be noted that, during the self-cleaning process, the cleaning elements 4 move exclusively along a circumferential direction of the internal surface 10a of the tubular element 10. In other words, the shoes 7 do not move along a direction parallel to the longitudinal development direction "A" of the filter 1.

## Claims

1. Self-cleaning filter (1) comprising:
- a casing (21) having an inlet opening (2) for withdrawing fluid to be filtered, a delivery opening (3) for allowing a filtered fluid to flow and a discharge opening (24) distinct from said delivery opening (3);
- a tubular filtering element (10) inserted in the casing (21) and configured to be passed through by a fluid to be filtered, said tubular element (10) defining an internal zone (22) within said casing (21) in fluid communication with said inlet opening (2) and an external zone (23) placed in fluid communication with said delivery opening (3), said tubular element (10) further having an internal surface (10a) facing said internal zone (22) and a longitudinal development direction (A);
- one or more cleaning elements (4) placed within said internal zone (22) and configured to rotate with respect to said longitudinal development direction (A), each cleaning element (4) comprising a suction aperture (5) facing said internal surface (10a) and placed in proximity and preferably in contact with said internal surface (10a) to suck dirt from said internal surface (10a), contact cleaning means (9) configured to rub on said internal surface (10a) to remove dirt from said internal surface (10a), said discharge opening (24) being placed in fluid communication with said suction apertures (5);
**characterized in that** it comprises a bypass valve (30) placed in parallel with respect to said suction apertures (5) and which can be opened to put said internal zone (22) in direct fluid communication with said discharge opening (24).

2. Self-cleaning filter (1) according to the preceding claim, **characterized in that** it comprises a chamber (27) arranged coaxially to said tubular element (10) and placed at one end (21a, 21b) of said casing (21), said discharge opening (24) being obtained at said chamber (27), said bypass valve (30) being placed between said internal zone (22) and said chamber (27).

3. Self-cleaning filter (1) according to the preceding claim, **characterized in that** said bypass valve (30) comprises a bypass opening (31) placed between said chamber (27) and said internal zone (22), a stem (32) associated with said bypass opening (31) and movable with respect to said bypass opening (31) to open/close it, actuating means (33) of said stem (32) to move it with respect to said bypass opening (31).

4. Self-cleaning filter (1) according to the preceding claim, **characterized in that** it comprises a wall (34) arranged between said chamber (27) and said internal zone (22), said bypass opening (31) being formed on said wall (34).

5. Self-cleaning filter (1) according to the preceding claim, **characterized in that** said actuating means (33) comprise a cylinder (35) and a piston (36) connected to said stem (32) and sliding inside said cylinder (35).

6. Self-cleaning filter (1) according to any one of the preceding claims, **characterized in that** each cleaning element (4) has a respective advancement direction (B), said contact cleaning means (9) being placed in front of said first suction aperture (5) along said advancement direction (B).

7. Self-cleaning filter (1) according to the preceding claim, **characterized in that** said contact cleaning means (9) comprise a plurality of brushes (11), each fixed to a respective cleaning element (4) and configured to slide in contact with said internal surface (10a) of said tubular element (10) along said advancement direction (B).

8. Self-cleaning filter (1) according to any one of the preceding claims, **characterized in that** each cleaning element (4) comprises a shoe (7) at least one elastic element configured to push said shoe (7) against said internal surface (10a).

9. Self-cleaning process of a filter (1) according to any one of the preceding claims, comprising the steps of:
- carrying out a rough cleaning by rotating said cleaning elements (4) to sweep the internal surface (10a) of said tubular element (10) and remove large particles of contaminant;
- carrying out a fine cleaning by rotating said cleaning elements (4) and, at the same time, exerting a suction action through said suction apertures (5) of sufficient intensity to remove small particles of contaminant from the internal surface (10a) of the tubular element (10);
**characterized in that** said bypass valve (30) is open during said rough cleaning step and is closed during said fine cleaning step to evacuate both large dirt particles and small dirt particles through said discharge opening (24).

10. Self-cleaning process according to the preceding claim, **characterized in that** both the rough cleaning step and the fine cleaning step are carried out sucking the fluid from said discharge opening (24).

11. Self-cleaning process according to claim 10 or 11, **characterized in that** said cleaning elements (4) move exclusively along a circumferential direction of the internal surface (10a) of the tubular element (10).

## Patentansprüche

1. Selbstreinigender Filter (1), umfassend:
- ein Gehäuse (21), das eine Einlassöffnung (2) zum Abziehen von zu filterndem Fluid aufweist, eine Abgabeöffnung (3) zum Strömenlassen eines gefilterten Fluids, und eine Abflussöffnung (24), die von der Abgabeöffnung (3) getrennt ist;
- ein rohrförmiges Filterelement (10), das in das Gehäuse (21) eingesetzt und konfiguriert ist, um von einem zu filternden Fluid durchflossen zu werden, wobei das rohrförmige Element (10) eine innere Zone (22) innerhalb des Gehäuses (21) in Fluidverbindung mit der Einlassöffnung (2) und eine äußere Zone (23) definiert, die in Fluidverbindung mit der Abgabeöffnung (3) eingerichtet ist, wobei das rohrförmige Element (10) ferner eine innere Oberfläche (10a), die der inneren Zone (22) zugewandt ist, und eine Längsausdehnungsrichtung (A) aufweist;
- ein oder mehrere Reinigungselemente (4), die innerhalb der inneren Zone (22) platziert und konfiguriert sind, um sich in Bezug auf die Längsausdehnungsrichtung (A) zu drehen, wobei jedes Reinigungselement (4) eine Saugöffnung (5) umfasst, die der inneren Oberfläche (10a) zugewandt ist und in der Nähe und bevorzugt in Kontakt mit der inneren Oberfläche (10a) platziert ist, um Verunreinigung von der inneren Oberfläche (10a) zu saugen, Kontaktreinigungsmittel (9), die konfiguriert sind, um an der inneren Oberfläche (10a) zu reiben, um Verunreinigung von der inneren Oberfläche (10a) zu entfernen, wobei die Abflussöffnung (24) in Fluidverbindung mit den Saugöffnungen (5) platziert ist;
**dadurch gekennzeichnet, dass** es ein Bypassventil (30) umfasst, das parallel in Bezug auf die Saugöffnungen (5) platziert ist und geöffnet werden kann, um die interne Zone (22) in direkte Fluidverbindung mit der Abflussöffnung (24) zu bringen.

2. Selbstreinigender Filter (1) nach dem vorstehenden Anspruch, **dadurch gekennzeichnet, dass** er eine Kammer (27) umfasst, die koaxial zu dem rohrförmigen Element (10) eingerichtet und an einem Ende (21a, 21b) des Gehäuses (21) platziert ist, wobei die Abflussöffnung (24) an der Kammer (27) erhalten wird, wobei das Bypassventil (30) zwischen der inneren Zone (22) und der Kammer (27) platziert ist.

3. Selbstreinigender Filter (1) nach dem vorstehenden Anspruch, **dadurch gekennzeichnet, dass** das Bypassventil (30) eine Bypassöffnung (31), die zwischen der Kammer (27) und der inneren Zone (22) platziert ist, einen Schaft (32), der der Bypassöffnung (31) zugeordnet ist und in Bezug auf die Bypassöffnung (31) bewegbar ist, um sie zu öffnen/schließen, Betätigungsmittel (33) des Schafts (32), um ihn in Bezug auf die Bypassöffnung (31) zu bewegen, umfasst.

4. Selbstreinigender Filter (1) nach dem vorstehenden Anspruch, **dadurch gekennzeichnet, dass** er eine Wand (34) umfasst, die zwischen der Kammer (27) und der inneren Zone (22) eingerichtet ist, wobei die Bypassöffnung (31) an der Wand (34) gebildet ist.

5. Selbstreinigender Filter (1) nach dem vorstehenden Anspruch, **dadurch gekennzeichnet, dass** die Betätigungsmittel (33) einen Zylinder (35) und einen Kolben (36) umfassen, der mit dem Schaft (32) verbunden ist und innerhalb des Zylinders (35) gleitet.

6. Selbstreinigender Filter (1) nach einem der vorstehenden Ansprüche, **dadurch gekennzeichnet, dass** jedes Reinigungselement (4) eine jeweilige Vorschubrichtung (B) aufweist, wobei die Kontaktreinigungsmittel (9) entlang der Vorschubrichtung (B) vor der ersten Saugöffnung (5) platziert sind.

7. Selbstreinigender Filter (1) nach dem vorstehenden Anspruch, **dadurch gekennzeichnet, dass** das Kontaktreinigungsmittel (9) eine Vielzahl von Bürsten (11) umfasst, die jeweils an einem jeweiligen Reinigungselement (4) befestigt und dazu konfiguriert sind, in Kontakt mit der Innenfläche (10a) des rohrförmigen Elements (10) entlang der Vorschubrichtung (B) zu gleiten.

8. Selbstreinigender Filter (1) nach einem der vorstehenden Ansprüche, **dadurch gekennzeichnet, dass** jedes Reinigungselement (4) einen Schuh (7) umfasst, der mindestens ein elastisches Element aufweist, das dazu konfiguriert ist, den Schuh (7) gegen die Innenfläche (10a) zu schieben.

9. Selbstreinigender Prozess eines Filters (1) nach einem der Ansprüche, der die folgenden Schritte umfasst:
- Durchführen einer Grobreinigung durch Drehen der Reinigungselemente (4), um die Innenfläche (10a) des rohrförmigen Elements (10) zu fegen und große Verunreinigungsteilchen zu entfernen;
- Durchführen einer Feinreinigung durch Drehen der Reinigungselemente (4) und gleichzeitiges Ausüben einer Saugwirkung durch die Saugöffnungen (5) mit ausreichender Stärke, um kleine Verunreinigungsteilchen von der Innenfläche (10a) des rohrförmigen Elements (10) zu entfernen;
**dadurch gekennzeichnet, dass** das Bypassventil (30) während des Grobreinigungsschritts offen und während des Feinreinigungsschritts geschlossen ist, um sowohl große Verunreinigungsteilchen als auch kleine Verunreinigungsteilchen durch die Ablauföffnung (24) abzuleiten.

10. Selbstreinigungsverfahren nach dem vorstehenden Anspruch, **dadurch gekennzeichnet, dass** sowohl der Grobreinigungsschritt als auch der Feinreinigungsschritt durchgeführt werden, indem das Fluid aus der Ablauföffnung (24) gesaugt wird.

11. Selbstreinigungsverfahren nach Anspruch 10 oder 11, **dadurch gekennzeichnet, dass** sich die Reinigungselemente (4) ausschließlich entlang einer Umfangsrichtung der Innenfläche (10a) des rohrförmigen Elements (10) bewegen.

## Revendications

1. Filtre autonettoyant (1) comprenant :
- un boîtier (21) ayant une ouverture d'entrée (2) pour retirer le fluide à filtrer, une ouverture de distribution (3) pour permettre à un fluide filtré de s'écouler et une ouverture de décharge (24) distincte de ladite ouverture de distribution (3) ;
- un élément filtrant tubulaire (10) inséré dans le boîtier (21) et configuré pour être traversé par un fluide à filtrer, ledit élément tubulaire (10) définissant une zone interne (22) à l'intérieur dudit boîtier (21) en communication fluidique avec ladite ouverture d'entrée (2) et une zone externe (23) placée en communication fluidique avec ladite ouverture de distribution (3), ledit élément tubulaire (10) ayant en outre une surface interne (10a) faisant face à ladite zone interne (22) et une direction de développement longitudinale (A) ;
- un ou plusieurs éléments de nettoyage (4) placés à l'intérieur de ladite zone interne (22) et configurés pour tourner par rapport à ladite direction longitudinale de développement (A), chaque élément de nettoyage (4) comprenant une ouverture d'aspiration (5) faisant face à ladite surface interne (10a) et placée à proximité et de préférence en contact avec ladite surface interne (10a) pour aspirer la saleté de ladite surface interne (10a), des moyens de nettoyage par contact (9) configurés pour frotter sur ladite surface interne (10a) pour éliminer la saleté de ladite surface interne (10a), ladite ouverture de décharge (24) étant placée en communication fluidique avec lesdites ouvertures d'aspiration (5) ;
**caractérisé en ce qu'**il comprend une soupape de dérivation (30) placée en parallèle par rapport auxdites ouvertures d'aspiration (5) et qui peut être ouverte pour mettre ladite zone interne (22) en communication fluidique directe avec ladite ouverture de décharge (24).

2. Filtre autonettoyant (1) selon la revendication précédente, **caractérisé en ce qu'**il comprend une chambre (27) disposée coaxialement audit élément tubulaire (10) et placée à une extrémité (21a, 21b) dudit boîtier (21), ladite ouverture de décharge (24) étant obtenue au niveau de ladite chambre (27), ladite soupape de dérivation (30) étant placée entre ladite zone interne (22) et ladite chambre (27).

3. Filtre autonettoyant (1) selon la revendication précédente, **caractérisé en ce que** ladite soupape de dérivation (30) comprend une ouverture de dérivation (31) placée entre ladite chambre (27) et ladite zone interne (22), une tige (32) associée à ladite ouverture de dérivation (31) et mobile par rapport à ladite ouverture de dérivation (31) pour l'ouvrir/la fermer, des moyens d'actionnement (33) de ladite tige (32) pour la déplacer par rapport à ladite ouverture de dérivation (31).

4. Filtre autonettoyant (1) selon la revendication précédente, **caractérisé en ce qu'**il comprend une paroi (34) disposée entre ladite chambre (27) et ladite zone interne (22), ladite ouverture de dérivation (31) étant formée sur ladite paroi (34).

5. Filtre autonettoyant (1) selon la revendication précédente, **caractérisé en ce que** lesdits moyens d'actionnement (33) comprennent un cylindre (35) et un piston (36) relié à ladite tige (32) et coulissant à l'intérieur dudit cylindre (35).

6. Filtre autonettoyant (1) selon l'une quelconque des revendications précédentes, **caractérisé en ce que** chaque élément de nettoyage (4) a une direction d'avancement respective (B), lesdits moyens de nettoyage par contact (9) étant placés devant ladite première ouverture d'aspiration (5) le long de ladite direction d'avancement (B).

7. Filtre autonettoyant (1) selon la revendication précédente, **caractérisé en ce que** lesdits moyens de nettoyage par contact (9) comprennent une pluralité de brosses (11), chacune fixée à un élément de nettoyage respectif (4) et configurée pour coulisser en contact avec ladite surface interne (10a) dudit élément tubulaire (10) le long de ladite direction d'avancement (B).

8. Filtre autonettoyant (1) selon l'une quelconque des revendications précédentes, **caractérisé en ce que** chaque élément de nettoyage (4) comprend un sabot (7) au moins un élément élastique configuré pour pousser ledit sabot (7) contre ladite surface interne (10a).

9. Procédé d'autonettoyage d'un filtre (1) selon l'une quelconque des revendications précédentes, comprenant les étapes consistant à :
- effectuer un nettoyage grossier en faisant tourner lesdits éléments de nettoyage (4) pour balayer la surface interne (10a) dudit élément tubulaire (10) et éliminer les grosses particules de contaminant ;
- effectuer un nettoyage fin en faisant tourner lesdits éléments de nettoyage (4) et, en même temps, exercer une action d'aspiration à travers lesdites ouvertures d'aspiration (5) d'une intensité suffisante pour éliminer les petites particules de contaminant de la surface interne (10a) de l'élément tubulaire (10) ;
**caractérisé en ce que** ladite soupape de dérivation (30) est ouverte pendant ladite étape de nettoyage grossier et est fermée pendant ladite étape de nettoyage fin pour évacuer à la fois les grosses particules de saleté et les petites particules de saleté à travers ladite ouverture de décharge (24).

10. Procédé d'autonettoyage selon la revendication précédente, **caractérisé en ce que** l'étape de nettoyage grossier et l'étape de nettoyage fin sont effectuées en aspirant le fluide de ladite ouverture de décharge (24).

11. Procédé d'autonettoyage selon la revendication 10 ou 11, **caractérisé en ce que** lesdits éléments de nettoyage (4) se déplacent exclusivement le long d'une direction circonférentielle de la surface interne (10a) de l'élément tubulaire (10).
